# EUROPÄISCHE PATENTSCHRIFT

(11) **EP 4 414 182 B1**
(45) Veröffentlichungstag und Bekanntmachung des Hinweises auf die Patenterteilung: **26.11.2025**
(21) Anmeldenummer: 24152008.9
(22) Anmeldetag: 16.01.2024
(51) Int. Cl.: B60C 1/00, B60C 9/02

(54) **GUMMI-FESTIGKEITSTRÄGER-VERBUND**
RUBBER/REINFORCING ADHESIVE-BACKING-MEMBER COMPOSITE
COMPOSITE CAOUTCHOUC-SUPPORT DE RÉSISTANCE

(30) Priorität: 13.02.2023 DE 102023201156
(43) Veröffentlichungstag der Anmeldung: 14.08.2024
(73) Patentinhaber: Continental Reifen Deutschland GmbH, 30175 Hannover (DE)
(72) Erfinder: Habicht, Stefan, 30175 Hannover (DE); Wenckel, Mathias, 30175 Hannover (DE)
(74) Vertreter: Continental Corporation

(56) Entgegenhaltungen:
- DE-A1- 3 741 722
- JP-A- 2009 083 537
- JP-A- H1 053 981
- JP-A- H10 181 305
- JP-A- H11 192 807
- US-A1- 2016 368 332
- US-A1- 2017 043 624
- US-A1- 2017 233 556

## Beschreibung

Die Erfindung betrifft einen Gummi-Festigkeitsträger-Verbund mit einer gasdichten Innenschicht aus einer Gummimischung und einer Karkasslage mit Festigkeitsträgern, wobei die Festigkeitsträger von einer Karkassgummierungsschicht ummantelt sind.

Weiterhin betrifft die Erfindung eine Gummikomponente sowie ein Verfahren zum Herstellen des Gummi-Festigkeitsträger-Verbunds und der Gummikomponente.

Aus verschiedenen technischen Bereichen sind Gummi-Festigkeitsträger-Verbunde bekannt, die eine hohe Luftdichtigkeit aufzuweisen haben. Beispielsweise werden hohe Anforderungen hinsichtlich der Gasdichtigkeit an Luftfedern, Pneumatikschläuche und Luftreifen gestellt. Aus verschiedenen Gründen werden an luftdichte Gummi-Festigkeitsträger-Verbunde und daraus hergestellten Gummikomponenten weitere Anforderungen gestellt, wie beispielsweise eine hohe mechanische Festigkeit sowie eine geringe Materialstärke und eine geringe Masse. Gummikomponenten, die im Betrieb durch eine mechanische Belastung einer Verformung unterworfen werden, weisen eine geringere Erwärmung auf, wenn sie eine geringe Materialstärke haben. Weiterhin ist es für derartige Gummikomponenten vorteilhaft, wenn diese möglichst geringe Inhomogenitäten aufweisen.

Gummi-Festigkeitsträger-Verbunde sind aus der JP H11 192807 A, JP H10 53981 A, JP H10 181305 A, US 2017/043624 A1, US 2017/233556 A1, DE 37 41 722 A1, JP 2009 083537 A und der US 2016/368332 A1 bekannt.

Vor diesem Hintergrund liegt der Erfindung die Aufgabe zugrunde, einen Gummi-Festigkeitsträger-Verbund sowie eine daraus hergestellte Gummikomponente sowie Verfahren zum Herstellen von Gummi-Festigkeitsträger-Verbunden und Gummikomponenten derart auszuführen, dass eine hohe Luftdichtigkeit sowie eine hohe mechanische Festigkeit bei einer geringen Materialstärke und einer hohen Homogenität erreicht wird.

Diese Aufgabe wird gelöst mit einem Gummi-Festigkeitsträger-Verbund gemäß den Merkmalen des Patentanspruches 1 sowie einer Gummikomponente und Verfahren zur Herstellung des Gummi-Festigkeitsträger-Verbunds und der Gummikomponente gemäß den nebengeordneten Ansprüchen. Die Unteransprüche betreffen besonders zweckmäßige Weiterbildungen der Erfindung.

Erfindungsgemäß ist also ein Gummi-Festigkeitsträger-Verbund, insbesondere ein Luftreifenbauteil oder aber ein Luftfederbauteil oder aber ein Pneumatikschlauchbauteil, mit einer gasdichten Innenschicht aus einer Gummimischung und einer Karkasslage mit Festigkeitsträgern vorgesehen, wobei die Festigkeitsträger von einer Karkassgummierungsschicht ummantelt sind, wobei die Innenschicht die Karkassgummierungsschicht umschließt, wobei die Karkassgummierungsschicht mehrere Festigkeitsträger miteinander verbindet.

Bei der Karkassgummierungsschicht handelt es sich typischerweise um eine schwefelvernetzbare Kautschukmischung. Durch ihre hohe dynamische und mechanische Beständigkeit sowie eine geringe Neigung zu Rissbildung und -wachstum trägt sie wesentlich zur Haltbarkeit des Gummi-Festigkeitsträger-Verbundes bei.

Die Luftdichtigkeit von Innenschichten wird durch die Weiterentwicklung der Materialien immer höher, beziehungsweise die Leckagerate immer geringer, so dass die Materialstärken von Innenschichten bei gleichbleibenden oder sogar sich erhöhenden Anforderungen an die Luftdichtigkeit immer geringer gewählt werden können. Es hat sich gezeigt, dass das Aufbringen von Innenschichten mit geringen Materialstärken im Aufbauprozess einer Gummikomponente nur mit einem erhöhten Aufwand sowie einer erhöhten Ausschussrate möglich ist, wobei die Anforderungen bei besonders geringen Materialstärken der Innenschicht weiter ansteigen. Dieses Problem wird gelöst, indem die Innenschicht bei ihrer Erzeugung beziehungsweise Formgebung um eine Karkassgummierungsschicht herum kalandriert wird und diese umschließt. Eine Gummikomponente mit einer besonders dünnen Innenschicht wird prozesssicher herstellbar.

Unter Umschließen wird insbesondere ein vollumfängliches Umschließen verstanden, in einem Querschnitt weist die Karkassgummierungsschicht also lediglich Kontaktflächen mit der Innenschicht und dem Festigkeitsträger auf. Ein Umschließen kann jedoch auch ein nicht vollumfängliches umschließen sein.

Weiterhin ermöglicht der erfindungsgemäße Gummi-Festigkeitsträger-Verbund Gummikomponenten, die auf ihrem Umfang eine besonders große Homogenität aufweisen. Die Anzahl und Stärke der Spleiße werden durch die Verringerung der Anzahl von aufgewickelten Komponenten verringert.

Eine bevorzugte Ausführungsform sieht vor, dass die Karkassgummierungsschicht mehrere Teilbereiche aufweist, wobei ein Teilbereich der Karkassgummierungsschicht genau einen Festigkeitsträger umgibt und nicht mit weiteren Teilbereichen der Karkassgummierungsschicht verbunden ist. Es hat sich gezeigt, dass durch diese Ausführungsform eine besonders geringe Menge von der Karkassgummierungsschicht zur Verwendung kommt, wodurch ein Gummi-Festigkeitsträger-Verbund mit einer besonders geringen Materialstärke und geringen Masse erzeugbar wird. Eine Übertragung der Kräfte zwischen den Festigkeitsträgern innerhalb des Gummi-Festigkeitsträger-Verbundes kann durch die Wahl der Durchmesser der Karkassgummierungsschichten sichergestellt und eingestellt werden.

Eine weitere bevorzugte Ausführungsform sieht vor, dass die Karkassgummierungsschicht alle Festigkeitsträger der Karkasslage miteinander verbindet. Durch das Verbinden aller Festigkeitsträger der Karkasslage mittels einer einzelnen zusammenhängenden Karkassgummierungsschicht wird eine besonders einfache Handhabung der Karkasslage beim Herstellen des Gummi-Festigkeitsträger-Verbunds gewährleistet, beispielsweise wenn sich Kord-zu-Kord-Abstände zunehmend verringern. Eine besonders hohe Festigkeit des Gummi-Festigkeitsträger-Verbunds auch in Querrichtung zu den Festigkeitsträgern wird bei einer geringen Materialstärke des Gummi-Festigkeitsträger-Verbunds ermöglicht.

Eine weitere bevorzugte Ausführungsform sieht vor, dass die Festigkeitsträger und die Karkassgummierungsschicht asymmetrisch in der Materialstärke der Innenschicht angeordnet ist. Durch die asymmetrische Anordnung wird sichergestellt, dass bei einer Extension einer Gummikomponente, beispielsweise im Reifenbauprozess, hergestellt aus dem Gummi-Festigkeitsträger-Verbund , die Festigkeitsträger, trotz ihrer geringeren Elastizität im Vergleich zur Innenschicht, sowie die Karkassgummierungsschicht innerhalb der Innenschicht verbleiben.

Eine weitere bevorzugte Ausführungsform sieht vor, dass die Innenschicht und somit die Gesamtdicke des Gummi-Festigkeitsträger-Verbunds im geheizten Zustand eine Materialstärke von kleiner als 2,0 mm, bevorzugt kleiner als 1,2 mm, weiter bevorzugt von kleiner als 1,0 mm und am meisten bevorzugt kleiner als 0,7 mm aufweist. Je geringer die Materialstärke der Innenschicht ist, umso geringer ist ihr Widerstand gegen eine Verformung und entsprechend geringer ist die in Wärme umgewandelt Energie, die zu einem unerwünschten Aufheizen der Gummikomponente führen kann und ein Wirkungsgradverlust darstellen kann.

Eine weitere bevorzugte Ausführungsform sieht vor, dass die Leckagerate der Innenschicht kleiner als 10 x 10E-17 m² / (Pa x s), bevorzugt kleiner als 3 x 10E-17 m² / (Pa x s), weiter bevorzugt kleiner als 1 x 10E-17 m² / (Pa x s) und am meisten bevorzugt kleiner als 3 x 10E-18 m² / (Pa x s) ist. Derart geringe Leckageraten haben sich für eine Vielzahl von Gummikomponenten als vorteilhaft erwiesen.

Eine weitere bevorzugte Ausführungsform sieht vor, dass die Karkassgummierungsschicht eine Materialstärke von 0,05 mm bis 1,2 mm, bevorzugt 0,1 mm bis 1,0 mm und weiter bevorzugt 0,2 mm bis 0,7 mm aufweist. Es hat sich gezeigt, dass eine Materialstärke der Karkassgummierungsschicht von 0,05 mm bis 1,2 mm für eine Vielzahl von Gummikomponente vorteilhaft ist, da eine derartige Karkassgummierungsschicht prozesssicher herstellbar ist und weiterhin bei einer geringen Masse und Materialstärke eine ausreichende Kraftübertragung zwischen den Festigkeitsträgern sicherstellt und die notwendige Haltbarkeit des Gummi-Festigkeitsträger-Verbund gewährleistet. Die weiter bevorzugten Ausführungsform erfüllen diese Anforderungen im besonderen Maße.

Erfindungsgemäß ist eine Gummikomponente aufweisend einen erfindungsgemäßen Gummi-Festigkeitsträger-Verbund nach einem der vorangehenden Ansprüchen vorgesehen. Eine derartige Gummikomponente hat sich als vorteilhaft herausgestellt, da sie bei einer hohen Luftdichtigkeit und hohen mechanischen Festigkeit eine besonders geringe Materialstärke der Innenschicht und der Karkassgummierungsschicht aufweist. Weiterhin sind Spleiße, die zu Inhomogenitäten führen hinsichtlich ihrer Anzahl und Stärke verringert.

Erfindungsgemäß ist ein Verfahren zum Herstellen eines Gummi-Festigkeitsträger-Verbunds, insbesondere eines Luftreifenbauteils, insbesondere eines erfindungsgemäßen Gummi-Festigkeitsträger-Verbunds oder Luftreifenbauteils mit den folgenden Schritten vorgesehen:
a) Bereitstellen eines Festigkeitsträgers und einer Karkassgummierungsschicht
b) Herstellen einer Karkasslage aus dem Festigkeitsträger und einer Karkassgummierung, beispielweise durch Kalandrieren des Festigkeitsträgers mit einer Karkassgummierungsschicht,
c) Bereitstellen einer Innenschicht,
d) Kalandrieren der Karkasslage mit der Innenschicht zu dem
Gummi-Festigkeitsträger-Verbund.

Es hat sich gezeigt, dass das Verfahren in besonders einfacher Weise ein prozesssicheres Herstellen eines Gummi-Festigkeitsträger-Verbunds mit einer hohen Luftdichtigkeit und einer hohen mechanischen Festigkeit bei einer geringen Materialstärke ermöglicht.

Erfindungsgemäß ist ein Verfahren zum Herstellen einer Gummikomponente, insbesondere eines Luftreifens, insbesondere einer erfindungsgemäßen Gummikomponente oder eines erfindungsgemäßen Luftreifens mit den folgenden Schritten vorgesehen:
a) Bereitstellen eines Festigkeitsträgers und einer Karkassgummierungsschicht
b) Herstellen einer Karkasslage aus dem Festigkeitsträger und einer Karkassgummierung, beispielweise durch Kalandrieren des Festigkeitsträgers mit einer Karkassgummierungsschicht,
c) Bereitstellen einer Innenschicht,
d) Kalandrieren der Karkasslage mit der Innenschicht zu dem Gummi-Festigkeitsträger-Verbund,
e) Aufwickeln des Gummi-Festigkeitsträger-Verbunds und weiteren Bauteilen,
f) Vulkanisieren der Bauteile zu der Gummikomponente.

Es hat sich gezeigt, dass das Verfahren in besonders einfacher Weise ein prozesssicheres Herstellen einer Gummikomponente mit einer hohen Luftdichtigkeit und einer hohen mechanischen Festigkeit bei einer geringen Materialstärke ermöglicht, wobei die Anzahl und Stärke von Spleißen verringert wird.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 einen nicht erfindungsgemäβen Gummi-Festigkeitsträger-Verbund mit einer gasdichten Innenschicht und symmetrisch angeordneten Festigkeitsträgern innerhalb eines Gummi-Festigkeitsträger-Verbundes;
Fig. 2 ein erfindungsgemäßer Gummi-Festigkeitsträger-Verbund mit einer gasdichten Innenschicht und asymmetrisch angeordneten Festigkeitsträgern innerhalb eines Gummi-Festigkeitsträger-Verbundes.

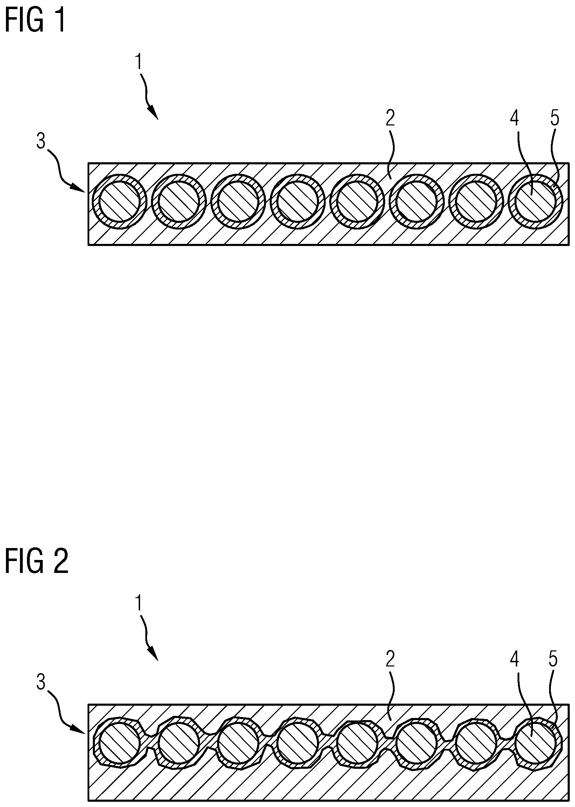

Figur 1 zeigt einen nicht erfindungsgemäßen Gummi-Festigkeitsträger-Verbund 1 mit einer gasdichten Innenschicht 2 und einer symmetrisch angeordneten Karkasslage 3, wobei die Karkasslage 3 eine Vielzahl von Festigkeitsträgern 4 aufweist. Die einzelnen Festigkeitsträger 4 sind jeweils vollumfänglich von einer Karkassgummierungsschicht 5 umgeben, die jeweils keine Verbindung zu den Karkassgummierungsschichten 5 der weiteren Festigkeitsträgern 4 aufweist. Das Umschließen der Festigkeitsträger 4 durch Karkassgummierungsschichten 5 vergrößert die Oberfläche, über die Kräfte von den Festigkeitsträger 4 auf die Innenschicht 2 übertragen werden, so dass die auf die Innenschicht 2 maximal übertragene Kraft pro Fläche gegenüber einer unmittelbaren Einbettung der Festigkeitsträger 4 in die Innenschicht 2 verringert wird.

In Figur 2 ist ein erfindungsgemäßer Gummi-Festigkeitsträger-Verbund 1 mit einer gasdichten Innenschicht 2 und einer in der Materialstärke der Innenschicht 2 asymmetrisch angeordneten Karkasslage 3 dargestellt. Die Karkasslage 3 weist eine Vielzahl von Festigkeitsträger 4 auf, wobei die Festigkeitsträger 4 von einer Karkassgummierungsschicht 5 umgeben sind. Die Karkassgummierungsschicht 5 ist als eine einzelne zusammenhängende Schicht ausgebildet, die die Festigkeitsträger 4 der Karkasslage 3 umschließt.

### Bezugszeichenliste

- 1: Gummi-Festigkeitsträger-Verbund
- 2: Innenschicht
- 3: Karkasslage
- 4: Festigkeitsträger
- 5: Karkassgummierungsschicht

## Patentansprüche

1. Gummi-Festigkeitsträger-Verbund (1), insbesondere Luftreifenbauteil, mit einer gasdichten Innenschicht (2) aus einer Gummimischung und einer Karkasslage (3) mit Festigkeitsträgern (4), wobei die Festigkeitsträger (4) von einer Karkassgummierungsschicht (5) ummantelt sind, wobei die Innenschicht (2) die Karkassgummierungsschicht (5) umschließt, **dadurch gekennzeichnet, dass** die Karkassgummierungsschicht (5) mehrere Festigkeitsträger (4) miteinander verbindet.

2. Gummi-Festigkeitsträger-Verbund (1) nach Anspruch 1, **dadurch gekennzeichnet, dass** die Karkassgummierungsschicht (5) mehrere Teilbereiche aufweist, wobei ein Teilbereich der Karkassgummierungsschicht (5) genau einen Festigkeitsträger (4) umgibt und nicht mit weiteren Teilbereichen der Karkassgummierungsschicht (5) verbunden ist.

3. Gummi-Festigkeitsträger-Verbund (1) nach den Ansprüchen 1 oder 2, **dadurch gekennzeichnet, dass** die Karkassgummierungsschicht (5) alle Festigkeitsträger (4) der Karkasslage (3) miteinander verbindet.

4. Gummi-Festigkeitsträger-Verbund (1) nach einem der vorangehenden Ansprüche, **dadurch gekennzeichnet, dass** die Festigkeitsträger (4) und die Karkassgummierungsschicht (5) asymmetrisch in der Materialstärke der Innenschicht (2) angeordnet ist.

5. Gummi-Festigkeitsträger-Verbund (1) nach einem der vorangehenden Ansprüche, **dadurch gekennzeichnet, dass** die Innenschicht (2) eine Materialstärke von kleiner als 2,0 mm, bevorzugt kleiner als 1,2 mm, weiter bevorzugt von kleiner als 1,0 mm und am meisten bevorzugt kleiner als 0,7 mm aufweist.

6. Gummi-Festigkeitsträger-Verbund (1) nach einem der vorangehenden Ansprüche, **dadurch gekennzeichnet, dass** die Karkassgummierungsschicht (5) eine Materialstärke von 0,05 mm bis 1,2 mm, bevorzugt 0,1 mm bis 1,0 mm und weiter bevorzugt 0,2 mm bis 0,7 mm aufweist.

7. Gummikomponente, insbesondere Luftreifen, **dadurch gekennzeichnet, dass** die Gummikomponente einen Gummi-Festigkeitsträger-Verbund (1) nach einem der vorangehenden Ansprüche aufweist.

8. Verfahren zum Herstellen eines Gummi-Festigkeitsträger-Verbunds (1), gemäß einem der Ansprüche 1 bis 7 mit den Schritten:
a) Bereitstellen eines Festigkeitsträgers (4),
b) Herstellen einer Karkasslage (3) aus dem Festigkeitsträger (4) und einer Karkassgummierung, beispielweise durch Kalandrieren des Festigkeitsträgers (4) mit einer Karkassgummierungsschicht (5),
c) Bereitstellen einer Innenschicht (2),
d) Kalandrieren der Karkasslage (3) mit der Innenschicht (2) zu dem
Gummi-Festigkeitsträger-Verbund (1).

9. Verfahren zum Herstellen einer Gummikomponente nach Anspruch 7 mit den Schritten:
Herstellen eines Gummi-Festigkeitsträger-Verbundes mit Hilfe des Verfahrens gemäß Anspruch 8, wobei das Verfahren zum Herstellen der Gummikomponente die zusätzlichen Schritte aufweist:
e) Aufwickeln des Gummi-Festigkeitsträger-Verbunds und weiteren Bauteilen,
f) Vulkanisieren der Bauteile zu der Gummikomponente.

## Claims

1. Rubber/reinforcing-element composite (1), in particular pneumatic-tyre constituent part, comprising a gas-tight inner layer (2) made of a rubber compound and a carcass ply (3) which has reinforcing elements (4), the reinforcing elements (4) being encased by a carcass rubber coating (5) and the inner layer (2) enclosing the carcass rubber coating (5), **characterized in that** the carcass rubber coating (5) interconnects multiple reinforcing elements (4).

2. Rubber/reinforcing-element composite (1) according to Claim 1, **characterized in that** the carcass rubber coating (5) has multiple portions, a portion of the carcass rubber coating (5) exactly surrounding a reinforcing element (4) and not being connected to further portions of the carcass rubber coating (5).

3. Rubber/reinforcing-element composite (1) according to Claim 1 or 2, **characterized in that** the carcass rubber coating (5) interconnects all the reinforcing elements (4) of the carcass ply (3).

4. Rubber/reinforcing-element composite (1) according to any of the preceding claims, **characterized in that** the reinforcing element (4) and the carcass rubber coating (5) are arranged asymmetrically in the material thickness of the inner layer (2).

5. Rubber/reinforcing-element composite (1) according to any of the preceding claims, **characterized in that** the inner layer (2) has a material thickness of less than 2.0 mm, preferably less than 1.2 mm, more preferably less than 1.0 mm and most preferably less than 0.7 mm.

6. Rubber/reinforcing-element composite (1) according to any of the preceding claims, **characterized in that** the carcass rubber coating (5) has a material thickness of 0.05 mm to 1.2 mm, preferably 0.1 mm to 1.0 mm and more preferably 0.2 mm to 0.7 mm.

7. Rubber component, in particular pneumatic tyre, **characterized in that** the rubber component comprises a rubber/reinforcing-element composite (1) according to any of the preceding claims.

8. Method for producing a rubber/reinforcing-element composite (1) according to any of Claims 1 to 7, comprising the following steps:
a) providing a reinforcing element (4),
b) producing a carcass ply (3) from the reinforcing element (4) and a carcass rubber coating, for example by calendering the reinforcing element (4) with a carcass rubber coating (5),
c) providing an inner layer (2),
d) calendering the carcass ply (3) with the inner layer (2) to form the rubber/reinforcing-element composite (1).

9. Method for producing a rubber component according to Claim 7, comprising the following steps:
producing a rubber/reinforcing-element composite by the method according to Claim 8, the method for producing the rubber component comprising the following additional steps:
e) wrapping around the rubber/reinforcing-element composite and further constituent parts,
f) vulcanizing the constituent parts to form the rubber component.

## Revendications

1. Composite caoutchouc-support de résistance (1), notamment composant de pneu, avec une couche intérieure (2) étanche aux gaz constituée d'un mélange de caoutchouc et d'une strate de carcasse (3) avec des supports de résistance (4), les supports de résistance (4) étant enrobés par une couche d'engommage de carcasse (5), la couche intérieure (2) entourant la couche d'engommage de carcasse (5), **caractérisé en ce que** la couche d'engommage de carcasse (5) relie plusieurs supports de résistance (4) entre eux.

2. Composite caoutchouc-support de résistance (1) selon la revendication 1, **caractérisé en ce que** la couche d'engommage de carcasse (5) présente plusieurs zones partielles, une zone partielle de la couche d'engommage de carcasse (5) entourant exactement un support de résistance (4) et n'étant pas reliée à d'autres zones partielles de la couche d'engommage de carcasse (5).

3. Composite caoutchouc-support de résistance (1) selon les revendications 1 ou 2, **caractérisé en ce que** la couche d'engommage de carcasse (5) relie entre eux tous les supports de résistance (4) de la strate de carcasse (3).

4. Composite caoutchouc-support de résistance (1) selon l'une quelconque des revendications précédentes, **caractérisé en ce que** les supports de résistance (4) et la couche d'engommage de carcasse (5) sont agencés de manière asymétrique dans l'épaisseur de matériau de la couche intérieure (2).

5. Composite caoutchouc-support de résistance (1) selon l'une quelconque des revendications précédentes, **caractérisé en ce que** la couche intérieure (2) présente une épaisseur de matériau inférieure à 2,0 mm, préférentiellement inférieure à 1,2 mm, encore préférentiellement inférieure à 1,0 mm et le plus préférentiellement inférieure à 0,7 mm.

6. Composite caoutchouc-support de résistance (1) selon l'une quelconque des revendications précédentes, **caractérisé en ce que** la couche d'engommage de carcasse (5) présente une épaisseur de matériau de 0,05 mm à 1,2 mm, préférentiellement de 0,1 mm à 1,0 mm et encore préférentiellement de 0,2 mm à 0,7 mm.

7. Composant en caoutchouc, notamment pneu, **caractérisé en ce que** le composant en caoutchouc présente un composite caoutchouc-support de résistance (1) selon l'une quelconque des revendications précédentes.

8. Procédé de fabrication d'un composite caoutchouc-support de résistance (1), selon l'une quelconque des revendications 1 à 7, avec les étapes suivantes :
a) la fourniture d'un support de résistance (4),
b) la fabrication d'une strate de carcasse (3) à partir du support de résistance (4) et d'un engommage de carcasse, par exemple par calandrage du support de résistance (4) avec une couche d'engommage de carcasse (5),
c) la fourniture d'une couche intérieure (2),
d) le calandrage de la strate de carcasse (3) avec la couche intérieure (2) pour former le composite caoutchouc-support de résistance (1).

9. Procédé de fabrication d'un composant en caoutchouc selon la revendication 7, avec les étapes suivantes :
la fabrication d'un composite caoutchouc-support de résistance à l'aide du procédé selon la revendication 8, le procédé de fabrication du composant en caoutchouc présentant les étapes supplémentaires suivantes :
e) l'enroulement du composite caoutchouc-support de résistance et d'autres composants,
f) la vulcanisation des composants pour former le composant en caoutchouc.
